# EUROPEAN PATENT SPECIFICATION

(11) **EP 0 317 684 B1**
(45) Date of publication and mention of the grant of the patent: **16.06.1993**
(21) Application number: 87500083.8
(22) Date of filing: 26.11.1987
(51) Int. Cl.: C09D 5/00, C09D 5/02, C09D 131/00

(54) **Multi-function protective coating for zinc coated steel - surfaces and its alloys**
Multifunktionaler Schutzanstrich für Zinkbeschichtete Stahloberflächen und ihre Legierungen
Revêtement protecteur multifonctionnel pour surfaces en acier galvanisé et ses alliages

(43) Date of publication of application: 31.05.1989
(73) Proprietor: PROCOAT, S.A., 08191 Rubi (Barcelona) (ES)
(72) Inventor: Brugarolas, Juan, E-08191 Rubi - Barcelona (ES); Rodellas, Federico, E-08191 Rubi - Barcelona (ES)
(74) Representative: Morgades y Manonelles, Juan Antonio

(56) References cited:
- EP-A- 0 163 325
- EP-A- 0 177 805
- US-A- 4 289 671
- CHEMICAL ABSTRACTS, vol. 108, no. 26, 27 June 1987, p. 71, abstract no. 223149e, Columbus, Ohio, US
- CHEMICAL ABSTRACTS, vol. 87, no. 4, 25 July 1977, p. 244, abstract no. 26996a, Columbus, Ohio, US; & JP-A-77 20 967
- CHEMICAL ABSTRACTS, vol. 106, no. 22, 01 June 1987, p. 96, abstract no. 178210p, Columbus, Ohio, US; & JP-A-61 227 179
- CHEMICAL ABSTRACTS, vol. 94, no. 8, 23 February 1981, p. 86, abstract no. 48918y, Columbus, Ohio, US; & JP-A-80 98 587
- CHEMICAL ABSTRACTS, vol. 88, no. 18, 01 May 1978, p. 77, abstract no. 122770p, Columbus, Ohio, US; & JP-A-77 117 333
- CHEMICAL ABSTRACTS, vol. 84, no. 22, 31 May 1976, p. 236, abstract no. 154055t, Columbus, Ohio, US; & JP-A-75 72 861

## Description

The present invention "MULTI-FUNCTION PROTECTIVE COATING FOR ZINC COATED STEEL SURFACES AND ITS ALLOYS" relates to a temporary protective coating for zinc or its alloys coated steel, wich applied under the conditions and composition described in the present paper will perform as a polyfunctional protective coating, witch characteristics are specified hereby.

Zinc coated steel materials find every day a wider use in industry, specially in automotive field, because of the increase in corrosion resistance demanded for. Steel surfaces are normally coated with zinc metal either by electrolytic means, such as zinc electrocoated steel (EC) or by a dipping process in molten zinc as for example hot dip galvanized steel (HDG).

More recently other coatings containeng more than one metal are being produced. We refer to coatings containing zinc/nickel and zinc/iron, obtained by electrodeposition and to others having zinc/aluminium on the coating and produced by molten metal dip process. Annealing is a process wich by a heat treatment of HDG, a type of zinc/iron alloy is obtained on the metal surface.

The use of such materials in industry presents more serious problems in metal forming operations, (more precisely deep drawing and stamping), than cold rolled steel sheet. This fact may be attributed to the different degree of smoothness of the metal surface.

The use of special oils for metal working, specially stamping, does not solve the problem entirely. Sometimes it can be very difficult to remove such oils after metal forming and prior to painting. When wax type lubricants are used for the purpose, the difficulty for cleaning seems to be similar, because of the heavy weight coating (2-4 gr/sq. mt) normally used. It is well know that zinc coated steel shows a surface which is usually rougher or having more porosity than CRS. This fact makes oil cleaning a difficult operation, and consequently degreasing processes become more complex.

A typical aspect of zinc electrocoated steel is the easiness of loosening some zinc dust, during sheet forming operations and more significantly in the neighbourhood of edges, where a thicker zinc coating is normally deposited and consequently less adherent. This provoking an early worn out or dusting of stamping presses or other tools.

It is a common practice to protect zinc materials with rust inhibitor oils, in order to avoid premature oxidation of the metal sheet during long periods of stock and transport. Antioxidant oils may be altered on their composition during prolonged periods of exposure to light and ambient. Sometimes they become physically ocluded inside the porous surface of the metal.

The aim of the present invention is to produce a multi-function organic coating for zinc coated steel materials, apporting to the metal sheet the following qualities:
1 - Apporting a lubricity effect to metal, and by reducing its friction coefficient, be able to improve metal forming conditions.
2 - Facilitate cleaners (stamping oil removers) working condition, as degreasing time and temperature are concerned, and providing a higher degree of cleanliness to the metal surface.
3 - To avoid zinc dust loosening during metal forming jobs.
4 - To provide an anticorrosion protection during stock and transport of metal sheet, without chemically altring the metal surface.

The qualities of the protective coating described in this invention, are achieved whenever a dry film of 0,5 gr/sq.mt. minimum is applied onto the metal surface.

The protective coating will contain the following ingredients:
A - Organic copolymers from the series acrylic, vinyl-acrylic, styreneacrylic, nitril-acrylic haing free carboxilic groups.
B - Lubricity additives which may provide a low friction coefficient to the deposited film. A selection was made amongst those additives witch would not alter the "dry state" of the film. This selection included inorganic compounds, such as graphite, Molibdenum Sulfide, calcium carbonate and/or organic products such as natural and synthetic waxes. Amongst these,montana, carnauba waxes and polyethylene waxes and others like, hidroxistearic acid soaps of calcium, zinc or lithium, fatty amides, with or without ethylene oxide groups, and polymers such as nylon and teflon.
C - Polyvalent cations can be added to the present description to crosslink the copolymer, in order to increase corrosion resistance of the film.
D - Conductive particles that will increase film conductivity and consequently allow for better weldebility. Particles such as carbon black, magnetite, powdered metals, have been selected.

The organic copolymers used in the present invention are prepared through the solution polymerization process and they contain monomers such as ethyl, buthyl, ethyl-2-hexyl acrylates, vinyl esthers, stirene, methye-crylate, and acrylic and methacrylic acid.

The addition of carboxilic groups, to a such extend as to provide an Acidity index, 1a = 30-60 mg KOH to the resin, will allow for solubility in water, once the polymer is brought to pH = 8 or above. The resin is normally prepared at 50-60% dry solids content in solvents from the group of alcohols and glycols.

The prefered waxes for the present composition are those which have been made previously water dispersable, and consequently making them miscible with the water-soluble resin. The final product having a high water content, which will reduce fire risks. Typical waxes for this composition are those known in the market under the trade names of Vestowax (Chemische Werke Hülls, AG) Epolene (Eastman Kodak) and others from BASF.

When solid mineral type lubricants are used in the present invention, they will be introduced into the mix by previously dispersing them into water and using tixothropic thicheners to prevent from early settlement. Colloidal silica compounds, bentonites, diurethanes, can be used for the purpose.

These two main ingredients, will permit to obtain a product with the qualities which are described in the present invention : reduced friction coefficient, easy removal of the film in alkaline clean ers, preventing zinc dusting, and providing a corrosion resistant protection during stock and transport to the zinc coated metal surface.

When a higher degree of corrosion resistance is desired, the addition of polyvalent cations such as Zn, Cr, etc in the form of soluble complexes has proven to be highly effective.

If a coating according to the present invention is applied onto metal sheet at a thickness higher than 2 gr/sq. mt. is will be necessary to add conductive elements to the composition, so that the coated sheet reamins weldable.

Conductive particles, as described above, can be used in a proportion equivalent to between 2 and 5% as respect to dry solids content. In this case, the appearance of final coating will be darker.

The dry film weight to deposit on the zinc coated metal will be from 0,5 to 5 gr/sq.mt. The amount of water to dilute the product of the invention for application use will vary depending on the choosen process, which can be by inmersion or flooding followed by roll squeezing, by roll coating or by electrostatic spraying onto the metal strip.

Zinc coated steel strip already having a film of the coating of the invention, which a film weight of no less than 0,5 gr/sq.mt., can be eventually treated with protective oils or with special stamping oils, to improve its perfomance.

The degree of corrosion resistance of coatings obtained from the described composition, in terms of Humidity Cabinet, at 40oC and 100 % R.H. (DIN 50017) is :

| | |
|---|---|
| Product prepared according to Example no.1 (1-1,5 gr/sq.mt.) | 24 H |
| Product prepared according to Example no.2 (1-1,5 gr/sq.mt.) | 100 H |
| Product Example no.2 (0,5 gr/sq.mt.) + Protective oil (0,5 gr/sq.mt.) | 400 H |
| Protective oil (1 gr/sq.mt.) | 24-48 H |

It was found out that when oils are applied onto metal sheet already coated with products of the invention, it is easier to remove them from metal surface with ordinary alkaline cleaners, than when they are aplied straight onto bare zinc coated metal sheet.

Next table ilustrates the possibility of time and temperature reducing in a cleaning operation, using a standard alkaline degreaser at pH = 9,5.

| | Degreasing bath temp. | Time required |
|---|---|---|
| Product according to the invention | 80 - 85ºC | <1 min. |
| Stamping oil | 80 - 85ºC | 5 min. |
| Product + Stamping oil | 80 - 85ºC | 2 min. |
| Stamping oil | 55 - 60ºC | 6 min. |
| Product + Stamping oil | 55 - 60ºC | 2-3 min. |

The easiness for removal, after 6 months ageing, has been checked also.

It was fond out, as it can be seen in the above table, that oil coating a metal sheet having a film of product of the invention does not prevent from dissolving the resin urderneath. This fact is also of great help when trying to remove old oil coatings whitch may have suffrered a chemical alteration in their composition through light exposure and starting a resinification process.

It is well known that zinc coated sheet is not an easy material as respects to formability, because of the different degrees of smoothnees of its surface or because of its zinc dusting condition.

In order to check the improveent in lubricity, confered by the product of the invention to zinc coated steel sheet, tets were conducted, based on the Sliding Friction Test.

References to this point may be found in :
* "Friction & Wear" I.V. Kragelskii, Butterworths, London 1965, 117-121.
* "Friction & Wear of Materials" E. Rabinowicz Wiley, N.Y. 1965, 125-142.
* "Sheet Metal Industry" Lillewodd & Wallace, Vol 41, 1964 p. 925.
* "Sheet Metal Industry" Butter and Pope, vol 44, 1967, p. 579
* "Relationship between Surface Characteristics and Galling Index of Steel Sheet" R.R. Hilsen and L.M. Bermick.
According to the mentioned Sliding Friction Tes, the Friction Ratio between Static Pressure and Dynamic Pressure is also referred as a Galling Index.
Any value of the Friction ratio below 1.2 is defined in this method as a non-galling material. Zinc coated steel treated with the product of the invention and submitted to the test, gave figures below 1.2 onto different substrates.

The organic coating described in this paper, will apport a lubricity quality to the metal sheet which will make unnecessary or at least minimize the use of special oils for metal forming jobs. The coating prevents from gripping in the machine tool, because of the continuity and adherence of the film to the metal base, this being provoked by the reactivity of carboxilic groups to metal and because of lits solid nature that prevents from being squeezed off under tool's pressure.

The advantages that a coating of the present invention provides to a zinc coated steel surface as lubricity is concerned, can also be extended to other materials which present difficult formability, as for example, stainless steel.

Although the product of the invention was originally designed for its use on zinc coated steel strips on a continuous process, there is no reason why it could not be used for protection of components and pieces made from above mentioned materials. The process being by dip or spraying followed by hot air drying or equivalent means.

The use of acrylic resins containg free carboxilic groups is already known as temporary metal protective coatings as it is described in the technical magazine "Galvano-Organo - Traitements de Surfaces" no. 568, page 557.

However, the use of such polymers as very thin coatings, as it is proposed in this invention, has not been applied in actual practice before, because of its poor corrosion protection effect. Besides the use of such polymers as an improvement for metal forming, has not been claimed before, neither alone or in compositions containing lubricity additives.

The organic coating object of the present invention presents an innovation as a multi-function coating that, applied onto zinc coated steel material will confer to it the following advantages : lower friction coefficient, reducing zinc dust loosening, protection against corrosion, and easiness for removing the coatings with standard cleaners.

Additionally, the fact that the coating can perform these qualities even at a very low thickness, makes the product most attractive from the economical point of view, not only for its low consumption rates but also for the savings in special oils and degreasers. The low thickness coating is also advisable for the application process, since being normally used on galvanizing lines working at high speed it is necessary to apply a thin coating, otherwise standard drying conditions would be unsufficient to remove all solvents.

### Examples.

### * Example no. 1.

Product according to the present invention, containing co-polymer resin and lubricity additive :

| | |
|---|---|
| Co-polymer (solution) | 40 - 50 % |
| Ammonia solution | 1.5- 2 % |
| Wax emulsion | 2 - 10 % |
| Deionized | to make up |

Depending on the choosen application process onto metal strip, the product will be reduced water to have a dry solids content from 8 to 18 %.

### * Example nº 2.

Product according to the presen invention and to Example no.1, which contains also polyvalent cations, in order to increase corrosion resistance:

| | |
|---|---|
| Copolymer (solution) | 40 - 50 % |
| Ammonia solution | 1,5- 2 % |
| Zinc complex (or other cations) | 0,5- 1,5% |
| Wax emulsion | 2 - 10 % |
| Deionized water | to make up |

Same apllication process as Example no. 1

### * Example no. 3.

Product according to present invention and to Examples no.1 and no.2, containing also conductive particles to improve weldability:

| | |
|---|---|
| Co-polymer (solution) | 40 - 50 % |
| Ammonia solution | 1,5- 2 % |
| Cation complex | 0,5- 1,5% |
| Wax emulsion | 2 - 10 % |
| Colloidal graphite | 1 - 5 % |
| Deionized water | to make up |

Same application process as Examples no. 1 and no. 2.

Above description shows that the coating decribed in present invention patent, is of easy application, and thata this application is being made and can be easily be put into practice, constituting without any doubt, an industrial result.

Sufficiently described the content of present invention, and for all the opportune purposes, it is understood that there is the possibility of introducing to it any variation or modification of detail, when being estimated to be necessary due to circumstances or the practice, as long not changing or modifying the essence of the invention, which is resumed in following CLAIMS.

## Claims

1. An improved polyfunctional temporary coating for steels plated with zinc and alloys thereof, such as zinc/iron, zinc/nickel, zinc/cobalt, zinc/aluminium, and metal surfaces in general, characterized in that the composition contains:
a) Acrylic, acryl-vinyl copolymers containing free carboxyl groups provided by acrylic or methacrylic acid, with an Ia = 30-60 mg/kOH, in a water-alcohol or water-glycol solution alkalified with ammonia at pH 8-9, in a proportion of 40 to 50% of the polymerization product by solution, the latter containing 50-60% copolymer.
b) From 1 to 10% of solid lubricating agents dispersed in an aqueous medium, such as natural or synthetic waxes, graphite, molybdenum disulfide.
c) From 0,1 to 1.5% of polyvalent cations such as copper, zinc, chrome in the form of soluble complexes.
d) From 0,1 to 5% of electrical conductive agents, such as lampblack, magnetite, finally divided metals and others.
e) Water up to 100% of the composition.

2. An improved polyfunctional temporary coating for steels plated with zinc and alloys thereof, characterized according to claim 1 in that the lubricants of the composition are waxes in aqueous dispersion such as montana wax, carnauba wax, polyethylene, polytetrafluoroethylene.

3. An improved polyfunctional temporary coating for steels plated with zinc and alloys thereof, characterized according to claim 1 in that the copolymers used are prepared by solution polymerization, using monomers such as ethyl acrylate, butyl acrylate, ethyl-2-hexyl acrylate, vinyl esters, styrene, methyl methacrylate, and acrylic and methacrylic acids.

## Patentansprüche

1. Ein verbesserter temporärer multifunktionaler Überzug für mit Zink und Zinklegierungen plattierten Stahl, wie z. B. Zink/Eisen, Zink/Nickel, Zink/Kobalt, Zink/Aluminium und metallene Oberflächen im allgemeinen, der dadurch gekennzeichnet ist, daß seine Verbindung folgendene Stoffe enthält:
a) Acrylische Copolymere aus Acrylvinyl, die freie Gruppen von durch Acryl bzw. Metacrylsäure erzeugtes Karboxyl enthalten, mit einer Ia = 30-60 mg/kOH in einer Wasser-Alkohol- oder Wasser-Glykol-Lösung, die mit Amoniak auf einen pH zwischen 8 und 9 alkalisiert worden ist; dies geschieht in einer Proportion zwischen 40 und 50 % der polymerisierten Produktlösung, wobei letztere zwischen 50 und 60 % Copolymere enthält.
b) Zwischen 1 und 10 % soliden Schmiermitteln, die in einem wässerigen Medium zerstreut werden, wie z.B. natürliche oder synthetische Wachse, Graphit, Molybdänit.
c) Zwischen 0,1 und 1,5 % mehrwertiger Kationen, wie z.B. Kupfer, Zink, Chrom in Form löslicher Komplexe.
d) Zwischen 0,1 und 5 % elektrischer Leiter, wie z.B. Flammruß, Magnetit, endgültig zerteilte Metalle und andere.
e) Wasser bis zu 100 % der Verbindung.

2. Ein verbesserter temporärer multifunktionaler Überzug für mit Zink und Zinklegierungen plattierten Stahl, der durch die in Patentanspruch 1 gemachten Angaben gekennzeichnet ist und in dem die Schmiermittel der Verbindung aus Wachsen in wässeriger Dispersion bestehen, wie z.B. Bergwachs, Carnaubawachs, Polyäthylen, Polytetrafluoräthylen.

3. Ein verbesserter temporärer multifunktionaler Überzug für mit Zink und Zinklegierungen plattierten Stahl, der durch die in Patentanspruch 1 gemachten Angaben gekennzeichnet ist und in dem die verwendeten Copolymere mittels einer Polymerisationlösung zubereitet werden, wobei z.B. folgende Monomere benutzt werden: Äthylacrylat, Butylacrylat, Äthylacrylat-2-Hexyl, Vinylestere, Styren, Methacrylsäuremethylester, und Acryl und Methacrylsäuren.

## Revendications

1. Un revêtement temporaire multifonctions amélioré pour aciers plaqués de zinc et d'alliages de zinc, tels que zinc/fer, zinc/nickel, zinc/cobalt, zinc/aluminium, et surfaces métalliques en général, caractérisé en ce que la composition contient:
a) Des copolymères acryliques, d'acrylovinyle, contenant des groupes libres de carboxyle produits par l'acide acrylique ou méthacrylique, avec un Ia = 30-60 mg/kOH, dans une solution eau-alcool ou eau-glycol alcalinisée à l'ammoniaque à un pH entre 8 et 9, dans une proportion de 40 à 50% de produit polymérisé par solution, celle-ci contenant entre 50 et 60% de copolymère.
b) Entre 1 et 10% d'agents lubrifiants solides dispersés en milieu aqueux, comme des cires naturelles ou synthétiques, du graphite, du disulfure de molybdène.
c) Entre 0,1 et 1,5% de cations polyvalents tels que du cuivre, du zinc, ou du chrome sous forme de complexes solubles.
d) Entre 0,1 et 5% d'agents conducteurs électriques, comme du noir de fumée, de la magnétite, des métaux finalement divisés, ou autres.
e) De l'eau jusqu'à 100% de la composition.

2. Un revêtement temporaire multifonctions amélioré pour aciers plaqués de zinc et d'alliages de zinc selon la revendication 1 caractérisé en ce que les lubrifiants de la composition sont des cires en dispersion aqueuse telles que de la cire montaine, de la cire de carnauba, du polyéthylène, ou du polytétrafluoréthylène.

3. Un revêtement temporaire multifonctions amélioré pour aciers plaqués de zinc et d'alliages de zinc selon la revendication 1 caractérisé en ce que les copolymères employés sont préparés par polymérisation en solution, en utilisant des monomères comme de l'acrylate d'éthyle, de l'acrylate de butyle, de l'acrylate d'éthyl-2-hexyle, des vinylesters, du styrène, du méthacrylate de méthyle, et des acides acryliques et méthacryliques.
